# EUROPÄISCHE PATENTSCHRIFT

(11) **EP 1 125 354 B1**
(45) Veröffentlichungstag und Bekanntmachung des Hinweises auf die Patenterteilung: **17.12.2003**
(21) Anmeldenummer: 99955664.0
(22) Anmeldetag: 04.09.1999
(51) Int. Cl.: H02M 3/158

(54) **ABWÄRTS-DROSSELWANDLER**
STEP-DOWN CONSTANT-CURRENT TRANSFORMER
TRANSFORMATEUR A COURANT CONSTANT, ABAISSEUR DE TENSION

(30) Priorität: 10.09.1998 DE 19841341
(43) Veröffentlichungstag der Anmeldung: 22.08.2001
(73) Patentinhaber: ROBERT BOSCH GMBH, 70442 Stuttgart (DE)
(72) Erfinder: DITTMER, Bernd, D-71640 Ludwigsburg-Ossweil (DE); GRONBACH, Roman, D-70825 Korntal (DE)
(86) Internationale Anmeldenummer: DE9902810
(87) Internationale Veröffentlichungsnummer: WO00016469

(56) Entgegenhaltungen:
- EP-A- 0 765 021
- DE-A- 19 625 844
- US-A- 4 672 303
- US-A- 5 430 366
- US-A- 5 731 694
- BRUCE D. MOORE: "Synchroneous rectification aids low-voltage power supplies" EDN - ELECTRICAL DESIGN NEWS, Bd. 40, Nr. 9, 27. April 1995 (1995-04-27), Seiten 127-136, XP000519146
- BARRY ARBETTER ET AL.: "DC-DC converter design for battery-operated systems" IEEE,12. Juni 1995 (1995-06-12), Seiten 103-109, XP000548393
- JEFFREY D. SHERMAN ET AL.: "Synchroneous rectification: improving the efficiency of buck converters." EDN,14. März 1996 (1996-03-14), Seiten 111-118, XP000592125

## Beschreibung

### Stand der Technik

Die Erfindung geht aus von einem Abwärts-Drosselwandler enthaltend hinter dem einen Eingang einen steuerbaren Schalter in Reihe mit einer Drossel im Längszweig und einen Kondensator im Querzweig am Ausgang, der im Oberbegriff des Anspruchs 1 definierten Gattung.

Aus dem Buch "Halbleiter-Schaltungstechnik" von U. Tietze und Ch. Schenck, Springer-Verlag, 9. Auflage 1989, Kapitel 18.6.1, Seite 563 - 566 ist ein Abwärts-Drosselwandler bekannt, der hinter dem einen Eingang einen steuerbaren Schalter in Reihe mit einer Drossel im Längszweig und einen Kondensator im Querzweig am Ausgang enthält, wobei im Quer zweig vor der Drossel eine Freilaufdiode vorgesehen ist. Der Abwärts-Drosselwandler wird zum Umsetzen einer Eingangs-Gleichspannung in eine andere, niedrigere Ausgangs-Gleichspannung eingesetzt. Wegen des einfachen Aufbaus und des hohen Wirkungsgrads wird dieser Wandler bevorzugt in Kraftfahrzeugen verwendet. Ein Problem bei diesem bekannten Abwärts-Drosselwandler besteht im sogenannten lückenden Betrieb, wenn der Ausgangsstrom kleiner als der halbe mittlere Laststrom ist.

Dieses Problem tritt insbesondere bei solchen Abwärts-Drosselwandlern auf, bei denen die Freilaufdiode im Querzweig durch einen steuerbaren Schalter zur Erhöhung des Wirkungsgrads und zur Bildung eines Synchrongleichrichters ersetzt ist. Beim Wandler mit Synchrongleichrichter treten zeitweilig Rückwärtsströme auf, die vom Ausgang in Richtung Eingang durch die Drossel fließen und auch den Ausgangskondensator entladen. Dies führt somit sowohl zu einer Verschlechterung des Wirkungsgrads als auch zu einer Erhöhung der Ausgangswelligkeit. Eine solche Anordnung ist der Anmelderin als interner Stand der Technik bekannt, jedoch druckschriftlich nicht belegbar.

Zur Vermeidung des Rückwärtsstromes durch den Synchrongleichrichter, ist es möglich, diesen während des Rückwärtsstromes abzuschalten. Dazu ist es allerdings notwendig, die Stromrichtung zu erkennen. Eine Stromrichtungserkennung kann herkömmlich über eine Strommessung erfolgen, beispielsweise mittels eines Shunts oder eines Stromwandlers. Hierbei muss allerdings unter Umständen eine Reduzierung des Ausgangssignalbereichs in Kauf genommen werden, da der Meßverstärker den positiven und den negativen Strombereich anzeigt. Dieses ist besonders bei solchen Schaltungen von Nachteil, die mit einer unipolaren Spannungsversorgung, beispielsweise in Kraftfahrzeugen, betrieben werden.

Die US 5 731 694 A beschreibt einen Abwärts-Drosselwandler, bei dem der Strom durch die Drossel überwacht wird und gegebenenfalls der MOSFET-Transistor im Querzweig gesperrt wird, um Rückwärtsströme zu vermeiden. Die Art der Strom- bzw. Spannungsüberwachung bei dieser Druckschrift unterscheidet sich wesentlich von derjenigen, die bei vorliegender Erfindung angewendet wird, nämlich die Feststellung eines Rückwärtsstromes durch die Spannungsüberwachung am Transistor im Querzweig.

Die US 4 672 303 A zeigt einen Abwärts-Drosselwandler, bei dem ein MOSFET-Transistor im Querzweig vorhanden ist. Dieser wird abgeschaltet, wenn ein Rückwärtsstrom fließt. Eine Spannungsüberwachung wie bei vorliegender Erfindung ist hier nicht vorgesehen.

Gemäß dem Artikel von Bruce. D. Moore: "Synchroneous rectification aids low-voltage power supplies", EDN - ELECTRICAL DESIGN NEWS, BD. 40, Nr. 9, wird der Transistor im Querzweig eines Abwärts-Drossselwandlers bei Rückwärtsströmen ebenfalls abgeschaltet. Hier ist parallel zu diesem Transistor eine Schottky-Diode geschaltet und ansonsten keine Schaltung in Abhängigkeit von der Spannung über dem Transistor im Querzweig vorgesehen.

Es ist Ziel der erfindungsgemäßen Schaltungsanordnung die Stromrichtungserkennung ohne die geschilderten Nachteile zuverlässig und mit geringem Aufwand durchzuführen, und Rückwärtsströme im Abwärts-Drosselwandler zu vermeiden.

### Vorteile der Erfindung

Der erfindungsgemäß gestaltete Abwärts-Drosselwandler hat den Vorteil, mit einfachen Mitteln die Erkennung des Auftretens von Rückwärtsstrom zu gewährleisten und die Möglichkeit zu schaffen, das Fließen dieses Rückwärtsstromes zu vermeiden bzw. zu unterbinden.

Gemäß der Erfindung wird dies prinzipiell dadurch erreicht, daß anstelle der Freilaufdiode im Querzweig vor der Drossel zur Bildung eines "Synchrongleichrichters" ein zweiter steuerbarer Schalter vorgesehen ist, beide gesteuerte Schalter aus MOSFET-Transistoren bestehen, eine Steuerung, insbesondere eine Puls-Weiten-Steuerung, für die MOSFET-Transistoren vorgesehen ist, die Spannung über dem MOSFET-Transistor im Querzweig daraufhin überwacht wird, ob ein Rückwärtsstrom, d.h. ein Strom durch die Drossel in Richtung vom Ausgang zum Eingang des Drosselwandlers fließt, bzw. das Spannungspotential an der Mittelanzapfung der aus den beiden MOSFET-Transistoren gebildeten Halbbrücke detektiert wird, und bei Auftreten eines solchen Rückwärtsstromes der MOSFET-Transistor im Querzweig gesperrt wird, um den Rückwärtsstrom zu verhindern.

Durch die in den weiteren Ansprüchen niedergelegten Maßnahmen sind vorteilhafte Weiterbildungen und Ausgestaltungen sowie Verbesserungen des im Anspruch 1 angegebenen Abwärts-Drosselwandlers möglich.

In einer besonders zweckmäßigen Ausgestaltung der Erfindung ist zur Spannungsdetektion ein Vergleicher vorgesehen, der die Spannungspotentiale an den Drain- und Source-Anschlüssen des MOSFET-Transistors im Querzweig miteinander vergleicht und dann ein steuerndes Ausgangssignal abgibt, wenn das Spannungspotential am Drain-Anschluß höher ist als am vorzugsweise auf Massepotential liegendem Source-Anschluß ist.

Gemäß einer vorteilhaften Weiterbildung dieser zweckmäßigen Ausgestaltung der Erfindung ist eine Freigabelogik für den Synchrongleichrichter vorgesehen, durch den das Ausgangssignal des Vergleichers mit dem für das Gate des im Querzweig liegenden MOSFET-Transistor bestimmten Ausgangssignal der Steuerung verknüpft wird. In einfacher Ausgestaltung ist die Freigabelogik eine Und-Schaltung, der das Gate-Ansteuersignal für das Gate des im Querzweig liegenden MOSFET-Transistors und das Ausgangssignal des Vergleichers als Eingangssignale zugeführt werden.

In weiterer vorteilhafter Ausgestaltung, ist als Vergleicher ein Operationsverstärker oder Komparator vorgesehen, dem am invertierenden Eingang das Spannungspotential am Drain-Anschluß des im Querzweig liegenden MOSFET-Transistors und am nichtinvertierenden Eingang das Spannungspotential des auf Massepotential liegenden Source-Anschlusses des im Querzweig liegenden MOSFET-Transistors zugeführt wird.

In vorteilhafter Ausgestaltung und Verbesserung dieses Ausführungsbeispieles der Erfindung wird Ausgangssignal des Vergleichers in einem Speicherelement gespeichert und auch für weitere Anwendungszwecke zur Verfügung gestellt ist, insbes ondere einem Mikrokontroller. Damit können beispielsweise Diagnosezwecke erfüllt und Systemzustände ermittelt werden.

In weiterer Verbesserung dieses Ausführungsbeispieles ist in einem Querzweig vor dem im Längszweig liegenden steuerbaren MOSFET-Transistor ein Kondensator zwischen dem positiven Eingang und dem Massepotential vorgesehen. Mit diesem Eingangskondensator wird eine Glättung der Eingangsgleichspannung und ein Schutz vor Überspannungen erreicht.

Der erfindungsgemäß gestaltete Drosselwandler wird besonders vorteilhaft in Parallelschaltung mehrerer Leistungsmodule verwendet. Entsprechend einer weiteren sehr vorteilhaften Verwendung wird er zur Bildung von verschachtelten Tiefsetzstellern (Interleaved Buck Converter), bei denen die einzelnen Leistungsmodule phasenversetzt angesteuert werden, verwendet.

### Zeichnung

Die Erfindung ist anhand eines in der Zeichnung dargestellten Ausführungsbeispiels in der nachfolgenden Beschreibung näher erläutert. Es zeigen:
- Fig. 1: schematisch das Prinzipschaltbild eines Ausführungsbeispieles des erfindungsgemäßen Abwärts-Drosselwandlers mit Synchrongleichrichter und Rückwärtsstromerkennung,
- Fig. 2: schematisch die zeitlichen Verläufe verschiedener Spannungen und Ströme im Abwärts-Drosselwandler gemäß der Erfindung bei nicht lückendem Betrieb, und
- Fig. 3: schematisch die zeitlichen Verläufe verschiedener Spannungen und Ströme im Abwärts-Drosselwandler gemäß der Erfindung bei lückendem Betrieb, Rückwärtsstromerkennung und Sperrung des Transistors im Querzweig.

### Beschreibung des Ausführungsbeispiels

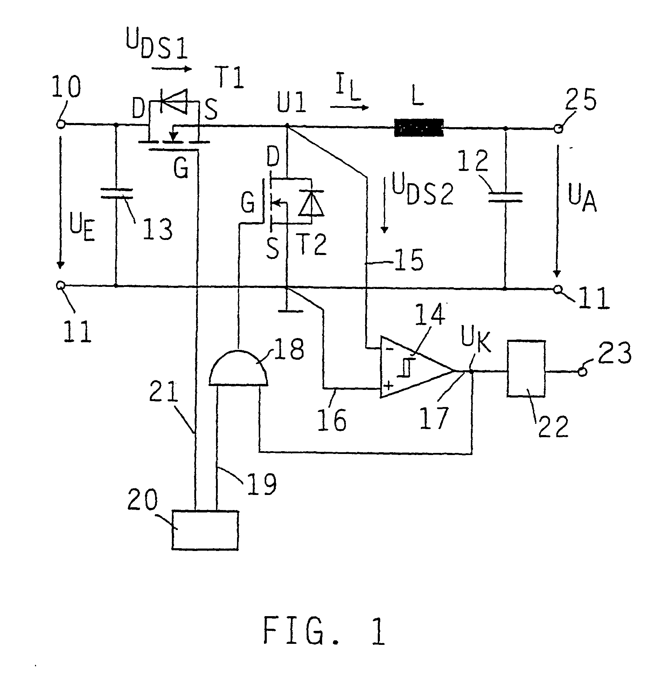

In Fig. 1 ist ein Ausführungsbeispiel anhand des Prinzipschaltbilds dargestellt. Der erfindungsgemäß gestaltete Abwärts-Drosselwandler enthält einen steuerbaren Schalter T1 in Reihe mit einer Drossel L im Längszweig. Der Längszweig erstreckt sich zwischen einem ersten Eingang 10 und einem Ausgang 25. Zwischen dem ersten Eingang 10 und einem zweiten Eingang 11 steht eine Eingangsgleichspannung U_{E} an. Diese Eingangsgleichspannung U_{E} kann z.B. die Batterie-Spannung eines Kraftfahrzeuges sein. Der zweite Eingang 11 ist z.B. auf Massepotential gelegt und bildet im dargestellten Ausführungsbeispiel auch den zweiten Ausgangspol. Zwischen dem Ausgang 25 und dem Pol 11 steht über einen dazwischen in einem Querzweig am Ausgang 25 vorgesehenen Kondensator 12, auch als Ausgangskondensator bezeichnet, die Ausgangsgleichspannung U_{A} an. Im Querzweig vor der Drossel L ist ein zweiter steuerbarer Schalter T2 vorgesehen. Weiterhin ist in einem Querzweig vor dem ersten steuerbaren Schalter T1 ein Kondensator 13, auch als Eingangskondensator bezeichnet, vorgesehen. Dieser erfüllt Glättungs- und Schutzfunktionen.

Die beiden gesteuerten Schalter T1 und T2 sind Transistoren und zwar insbesondere MOSFET-Transistoren. Die Durchlaß-Charakteristik von solchen MOSFET-Transistoren ist in beiden Stromflußrichtungen, Drain nach Source und Source nach Drain, im wesentlichen gleich. Die Durchlaßeigenschaft in Richtung von der Source zur Drain ist durch die Diode dargestellt, die diese an sich parasitäte Eigenschaft darstellt.

Gemäß der Erfindung wird zur Vermeidung von Rückwärtsströmen, d.h. von Strömen die entgegengesetzt dem gemäß Pfeil I_{L} eingezeichneten Last- oder Drosselstrom I_{L} durch die Drossel L fließen, das Spannungspotential U1 am Verbindungspunkt der aus den beiden Transistoren T1 und T2 gebildeten Halbbrücke überwacht. Oder mit anderen Worten, es wird die Spannung U_{DS2} über der Drain-Source-Strecke des Transistors T2 detektiert.

Entsprechend dem dargestellten Ausführungsbeispiel wird zu dieser Spannungsdetektierung ein Vergleicher 14 eingesetzt, der insbesondere ein Operationsverstärker oder ein Komparator mit Hysterese verschaltet als Schmitt-Trigger, sein kann, das Spannungspotential U1 an der Mittelanzapfung der aus den beiden Transistoren T1 und T2 gebildeten Halbbrücke mit dem am gemeinsamen Ein- und Ausgangspol 11 anliegenden Spannungspotential, im dargestellten Ausführungsbeispiel dem Massepotential, vergleicht. Dazu ist die Mittelanzapfung mit der Spannung U1 über eine Leitung 15 mit dem invertierenden Eingang (-) des Vergleichers 14 und das Potential des gemeinsamen Pols 11 über eine Leitung 16 mit dem nichtinvertierenden Eingang (+) des Vergleichers verbunden. Am Ausgang 17 des Vergleichers steht das Signal U_{K} an. Dieses Signal U_{K} steht dann an, wenn das Spannungspotential am Drain-Anschluß D des als Synchrongleichrichter arbeitenden zweiten Transistor T2 höher ist als an dessen auf Massepotential liegendem Source-Anschluß S.

Der Ausgang 17 des Vergleichers 14 wird als Eingangssignal auf eine Freigabelogik 18 für den Synchrongleichrichter T2 gegeben. Ein weiteres Eingangssignal dieser insbesondere aus einer logischen Und-Schaltung 18 bestehenden Freigabelogik, ist das Gatesteuersignal auf Leitung 19, das von einer Steuerung 20 erzeugt wird. Die Steuerung 20 erzeugt auch das Gatesteuersignal für den Transistor T1 im Längszweig, das dessen Gate G auf einer Leitung 21 zugeführt wird. Die Steuerung 20 ist insbesondere eine Puls-Weiten-Modulation oder Puls-Frequenz-Modulation und stellt dementsprechend die Ansteuersignale für das Ein- und Ausschalten der beiden MOSFET-Transistoren T1 und T2 zur Verfügung.

Das Ausgangssignal U_{K} des Vergleichers 14 kann auf Leitung 17 auch einem Speicherelement 22, welches z.B. aus einem Latch oder einem Flip-Flop bestehen kann, zugeführt werden. Am Ausgang 23 steht somit dieses Signal U_{K} für Diagnosezwecke und für Zwecke der Bestimmung von Systemzuständen zur Verfügung, welche insbesondere mit Hilfe eines Mikrokontrollers ermittelt werden können.

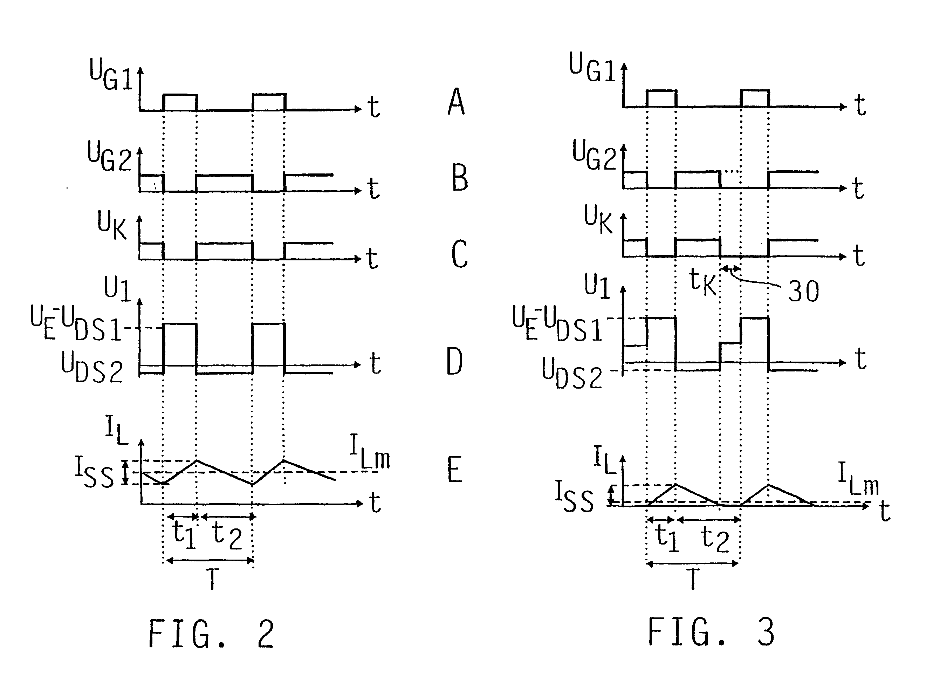

Anhand der Diagramme der Fig. 2 und 3 wird nachfolgend die Arbeits- und Wirkungsweise des erfindungsgemäß gestalteten Abwärts-Drosselwandlers näher erläutert. Fig. 2 zeigt schematisch die zeitlichen Verläufe verschiedener Spannungen und Ströme im Abwärts-Drosselwandler gemäß der Erfindung bei nicht lückendem, normalen Betrieb und Fig. 3 zeigt schematisch die zeitlichen Verläufe derselben verschiedenen Spannungen und Ströme im Abwärts-Drosselwandler gemäß der Erfindung bei lückendem Betrieb, sowie die erfindungsgemäße Rückwärtsstromerkennung und die Sperrung des Transistors T2 im Querzweig durch den zeitweise aktiven Vergleicher 14.

Im Diagramm A ist die Spannung U_{G1} am Gate G des ersten, im Längszweig liegenden Transistors T1 über der Zeit t dargestellt. Im Diagramm B ist die Spannung U_{G2} am Gate G des zweiten, im Querzweig liegenden Transistors T2 über der Zeit t dargestellt. Im Diagramm C ist die Ausgangsspannung U_{K} des Vergleichers 14 auf Leitung 17 über der Zeit t dargestellt. Im Diagramm D ist die Spannung U1 an der Mittelanzapfung der von den beiden Transistoren T1 und T2 gebildeten Halbbrücke über der Zeit dargestellt. Dabei ist der Wert für U1 die Differenz der Eingangsspannung U_{E} und der Drain-Source-Spannung U_{DS1} des ersten Transistors T1, U1=U_{E} - U_{DS1}. Eingetragen in dieses Diagramm ist weiterhin der Wert der Drain-Source-Spannung U_{DS2} des zweiten Transistors T2. Im untersten bzw. letzten Diagramm E ist der Last- oder Drosselstrom I_{L} über der Zeit t dargestellt.

Im Diagramm E der Fig. 2 ist der in etwa dreieckförmige Verlauf des Last- oder Drosselstroms I_{L} dargestellt. Dabei ist durch einen Doppelpfeil die Wertspanne des zwischen den Dreiecksspitzen auftretenden Spitzen-Spitzen-Stroms I_{SS} und der sich ergebende mittlere Laststrom I_{Lm} gestrichelt eingetragen. Bei diesem dargestellten Fall von Normalbetrieb sinkt der Wert des Last- oder Drosselstromes I_{L} nicht unter den Wert Null, es tritt also kein in entgegengesetzter Richtung fließender Strom auf.

Im Gegensatz dazu ist im Diagramm E der Fig. 3 der Fall dargestellt, bei dem zeitweise der Last- oder Drosselstrom I_{L} im positiven Bereich aussetzt bzw. lückt. Dies ist dann der Fall, wenn der mittlere Last- oder Drosselstrom I_{Lm} kleiner als der halbe Wert des Spitzen-Spitzen-Stroms I_{SS} wird. Dies ist gestrichelt eingetragen.

Im Diagramm E von Fig. 2 sind die Zeiten eingetragen, in denen der erste Transistor T1 leitend geschaltet ist, nämlich während t₁, in der die Gatespannung U_{G1} hoch ist, und in denen der zweite Transistor T2 leitend geschaltet ist, nämlich t₂, in der die Gatespannung U_{G2}, hoch ist. Bei diesem Normalbetrieb ist die Ausgangsspannung U_{K} des Vergleichers auch immer dann hoch, wenn entweder U_{G1} oder U_{G2} hoch ist. Die Spannung U_{DS2} über der Drain-Source-Strecke des zweiten Transistors T2 ist dabei jeweils negativ, wie in der Fig. 2 gezeigt. Diese Spannung U_{DS2} wechselt dann ihr Vorzeichen, wenn ein Rückwärtsstrom zu fließen beginnt, bzw. dann, wenn, wie in Fig. 3 dargestellt, der Last- oder Drosselstrom I_{L} vom Positiven her den Wert Null erreicht. Dann ändert sich auch der Wert der Spannung U_{K} von hoch auf niedrig und während der in Fig. 3 mit dem Bezugszeichen 30 eingezeichneten Zeit t_{K} ist der Vergleicher 14 in der Weise aktiv, daß über die Und-Schaltung 18 das Gate-Ansteuersignal auf Leitung 19 blockiert wird, so daß das Gate vom zweiten Transistor nicht mehr angesteuert und dieser somit gesperrt ist. Damit wird der Rückwärtsstrom über den Transistor T2 vermieden, ebenso wie die Nachteile, welche mit einem derartigen Rückwärtsstrom einhergehen.

Der erfindungsgemäß gestaltete Abwärts-Drosselwandler zeichnet sich bei sehr wirksamer Vermeidung von Rückwärtsströmen durch einen einfachen Schaltungsaufbau aus. Er ist leicht duplizierbar, weist einen geringen Platzbedarf auf und ist gut zu integrieren. Insbesondere dann, wenn zur Steigerung der Ausgangsleistung mehrere Leistungsmodule in Parallelschaltung Verwendung finden, oder beim Einsatz von verschachtelten Tiefsetzstellern (Interleaved Buck Converter), bei denen die einzelnen Leistungsmodule phasenversetzt angesteuert werden, ist die erfindungsgemäße Feststellung und Vermeidung von Rückwärtsströmen von besonderem Vorteil.

## Patentansprüche

1. Abwärts-Drosselwandler enthaltend hinter dem einen Eingang (10) einen steuerbaren Schalter (T1) in Reihe mit einer Drossel (L) im Längszweig und einen Kondensator (12) im Querzweig am Ausgang (25), wobei im Querzweig vor der Drossel (L) eine Freilaufdiode vorgesehen ist, zum Umsetzen einer Eingangs-Gleichspannung in eine andere, niedrigere Ausgangs-Gleichspannung, wobei
anstelle der Freilaufdiode im Querzweig vor der Drossel (L) zur Bildung eines Synchrongleichrichters ein zweiter steuerbarer Schalter (T2) vorgesehen ist, beide gesteuerte Schalter aus MOSFET-Transistoren (T1, T2) bestehen,
eine Steuerung (20), insbesondere eine Puls-Weiten-Steuerung, für die MOSFET-Transistoren (T1, T2) vorgesehen ist, und bei Auftreten eines Rückwärtsstroms der Transistor (T2) im Querzweig gesperrt wird,
**dadurch gekennzeichnet, daß**
die Spannung über dem MOSFET-Transistor (T2) im Querzweig daraufhin überwacht wird, ob ein Rückwärtsstrom, d.h. ein Strom durch die Drossel (L) in Richtung vom Ausgang (25) zum Eingang (10) des Drosselwandlers fließt, bzw. das Spannungspotential (U₁) an der Mittelanzapfung der aus den beiden MOSFET-Transistoren (T1, T2) gebildeten Halbbrücke detektiert wird, und
bei Auftreten eines solchen Rückwärtsstromes bzw. kritischen Spannungspotentials der MOSFET-Transistor (T2) im Querzweig gesperrt wird, um den Rückwärtsstrom zu verhindern.

2. Drosselwandler nach Anspruch 1, **dadurch gekennzeichnet, daß** zur Spannungsdetektion ein Vergleicher (14) vorgesehen ist, der die Spannungspotentiale an den Drain- und Source-Anschlüssen des MOSFET-Transistors (T2) im Querzweig miteinander vergleicht und dann ein steuerndes Ausgangssignal abgibt, wenn das Spannungspotential (U₁) am Drain-Anschluß (D) höher ist als am vorzugsweise auf Massepotential (11) liegendem Source-Anschluß (S) ist.

3. Drosselwandler nach Anspruch 2, **dadurch gekennzeichnet, daß** eine Freigabelogik (18) für den Synchrongleichrichter vorgesehen ist, durch den das Ausgangssignal (U_{K}) des Vergleichers (14) mit dem für das Gate (G) des im Querzweig liegenden MOSFET-Transistor (T2) bestimmten Ausgangssignal (19) der Steuerung (20) verknüpft wird.

4. Drosselwandler nach Anspruch 3, **dadurch gekennzeichnet, daß** die Freigabelogik eine Und-Schaltung (18) ist, der das Gate-Ansteuersignal (19) für das Gate (G) des im Querzweig liegenden MOSFET-Transistors (T2) und das Ausgangssignal (17) des Vergleichers (14) als Eingangssignale zugeführt werden.

5. Drosselwandler nach Anspruch 2 oder einem der Ansprüche 3 oder 4, **dadurch gekennzeichnet, daß** als Vergleicher ein Operationsverstärker oder Komparator (14) vorgesehen ist, dem am invertierenden Eingang (-) das Spannungspotential (U₁) am Drain-Anschluß (D) des im Querzweig liegenden MOSFET-Transistors (T2) und am nichtinvertierenden Eingang (+) das Spannungspotential des auf Massepotential liegenden Source-Anschlusses (S, 11) des im Querzweig liegenden MOSFET-Transistors (T2) zugeführt wird.

6. Drosselwandler nach Anspruch 2 oder einem der Ansprüche 3 bis 5, **dadurch gekennzeichnet, daß** das Ausgangssignal (U_{K}) des Vergleichers (14) in einem Speicherelement (22) gespeichert und auch für weitere Anwendungszwecke zur Verfügung gestellt ist, insbesondere einem Mikrokontroller.

7. Drosselwandler nach Anspruch 1 oder einem der Ansprüche 2 bis 6, **dadurch gekennzeichnet, daß** in einem Querzweig vor dem im Längszweig liegenden steuerbaren MOSFET-Transistor (T1) ein Kondensator (13) zwischen dem positiven Eingang (10) und dem Massepotential (11) vorgesehen ist.

8. Drosselwandler nach einem der vorigen Ansprüche, **dadurch gekennzeichnet, daß** er in Parallelschaltung mehrerer Leistungsmodule verwendet wird.

9. Drosselwandler nach einem der Ansprüche 1 bis 7, **dadurch gekennzeichnet, daß** er zur Bildung von verschachtelten Tiefsetzstellern (Interleaved Buck Converter), bei denen die einzelnen Leistungsmodule phasenversetzt angesteuert werden, verwendet wird.

10. Verfahren zur Erkennung und Vermeidung von Rückwärtsströmen in einem Abwärts-Drosselwandler, bei welchem
ein steuerbarer Schalter in Reihe mit einer Drossel im Längszweig und ein Kondensator im Querzweig am Ausgang vorgesehen ist sowie im Querzweig vor der Drossel eine Freilaufdiode, und der zum Umsetzen einer Eingangs-Gleichspannung in eine andere, niedrigere Ausgangs-Gleichspannung dient, wobei
anstelle der Freilaufdiode im Querzweig vor der Drossel zur Bildung eines Synchrongleichrichters ein zweiter steuerbarer Schalter verwendet wird,
als gesteuerte Schalter MOSFET-Transistoren verwendet werden, eine Steuerung, insbesondere eine Puls-Weiten-Steuerung, die Ansteuerung der MOSFET-Transistoren vornimmt,
**dadurch gekennzeichnet, daß**
die Spannung über dem MOSFET-Transistor im Querzweig daraufhin überwacht wird, ob ein Rückwärtsstrom, d.h. ein Strom durch die Drossel in Richtung vom Ausgang zum Eingang des Drosselwandlers fließt, bzw. das Spannungspotential an der Mittelanzapfung der aus den beiden MOSFET-Transistoren gebildeten Halbbrücke detektiert wird, und
bei Auftreten eines solchen Rückwärtsstromes bzw. kritischen Spannungspotentials der MOSFET-Transistor im Querzweig gesperrt wird, um den Rückwärtsstrom zu verhindern.

## Claims

1. Step-down inductor-type converter containing, downstream of one input (10), a controllable switch (T1) in series with an inductor (L) in the series path and a capacitor (12) in the shunt path at the output (25), a freewheeling diode being provided in the shunt path upstream of the inductor (L), for converting one DC input voltage into another, lower DC output voltage, in which case
a second controllable switch (T2) is provided instead of the freewheeling diode in the shunt path upstream of the inductor (L) for the purpose of forming a synchronous rectifier, both controlled switches comprise MOSFET transistors (T1, T2),
a controller (20), in particular a pulse width controller, is provided for the MOSFET transistors (T1, T2), and, when a reverse current occurs, the transistor (T2) in the shunt path is turned off,
**characterized in that**
the voltage across the MOSFET transistor (T2) in the shunt path is monitored in respect of whether a reverse current flows, i.e. a current flows through the inductor (L) in the direction from the output (25) to the input (10) of the inductor-type converter, or the voltage potential (U₁) at the centre tap of the half-bridge formed from the two MOSFET transistors (T1, T2) is detected, and
when such a reverse current or critical voltage potential occurs, the MOSFET transistor (T2) in the shunt path is turned off in order to prevent the reverse current.

2. Inductor-type converter according to Claim 1, **characterized in that** a comparator (14) is provided for voltage detection purposes, which comparator compares the voltage potentials at the drain and source terminals of the MOSFET transistor (2) in the shunt path with one another and then outputs a controlling output signal if the voltage potential (U₁) at the drain terminal (D) is higher than at the source terminal (S), which is preferably at earth potential (11).

3. Inductor-type converter according to Claim 2, **characterized in that** provision is made of an enable logic (18) for the synchronous rectifier, by means of which the output signal (U_{K}) of the comparator (14) is combined with the output signal (19) of the controller (20) that is intended for the gate (G) of the MOSFET transistor (T2) situated in the shunt path.

4. Inductor-type converter according to Claim 3, **characterized in that** the enable logic is an AND circuit (18), to which the gate drive signal (19) for the gate (G) of the MOSFET transistor (T2) situated in the shunt path and the output signal (17) of the comparator (14) are fed as input signals.

5. Inductor-type converter according to Claim 2 or either of Claims 3 and 4, **characterized in that** the comparator provided is an operational amplifier or comparator (14), to which the voltage potential (U₁) at the drain terminal (D) of the MOSFET transistor (T2) situated in the shunt path is fed at the inverting input (-) and the voltage potential of the source terminal (S, 11) - at earth potential - of the MOSFET transistor (T2) situated in the shunt path is fed at the non-inverting input (+).

6. Inductor-type converter according to Claim 2 or one of Claims 3 to 5, **characterized in that** the output signal (U_{K}) of the comparator (14) is stored in a storage element (22) and also made available for further application purposes, in particular to a microcontroller.

7. Inductor-type converter according to Claim 1 or one of Claims 2 to 6, **characterized in that**, in a shunt path upstream of the controllable MOSFET transistor (T1) situated in the series path, a capacitor (13) is provided between the positive input (10) and the earth potential (11).

8. Inductor-type converter according to one of the preceding claims, **characterized in that** it is used in a parallel circuit comprising a plurality of power modules.

9. Inductor-type converter according to one of Claims 1 to 7, **characterized in that** it is used to form interleaved buck converters, in which the individual power modules are driven in a phase-offset manner.

10. Method for identifying and avoiding reverse currents in a step-down inductor-type converter, in which a controllable switch is provided in series with an inductor in the series path and a capacitor is provided in the shunt path at the output, and a freewheeling diode is provided in the shunt path upstream of the inductor, and which serves for converting one DC input voltage into another, lower DC output voltage, in which case
a second controllable switch is used instead of the freewheeling diode in the shunt path upstream of the inductor for the purpose of forming a synchronous rectifier,
MOSFET transistors are used as controlled switches,
a controller, in particular a pulse width controller, performs the driving of the MOSFET transistors,
**characterized in that**
the voltage across the MOSFET transistor in the shunt path is monitored in respect of whether a reverse current flows, i.e. a current flows through the inductor in the direction from the output to the input of the inductor-type converter, or the voltage potential at the centre tap of the half-bridge formed from the two MOSFET transistors is detected, and
when such a reverse current or critical voltage potential occurs, the MOSFET transistor in the shunt path is turned off in order to prevent the reverse current.

## Revendications

1. Convertisseur abaisseur à bobine contenant, derrière l'entrée (10) unique d'un commutateur (T1) commandable, en ligne avec une bobine (L) dans la branche longitudinale et un condensateur (12) dans la branche transversale à la sortie (25), avec dans la branche transversale, avant la bobine (L), une diode de roue libre prévue pour transposer une tension continue d'entrée en une autre tension continue inférieure de sortie, alors qu'
à la place de la diode de roue libre dans la branche transversale, avant la bobine (L), un deuxième commutateur (T2) commandable est prévu pour former un redresseur synchrone, les deux commutateurs commandables étant des transistors (T1, T2) MOSFET, avec
une commande (20), en particulier une commande de largeur d'impulsion prévue pour les transistors (T1, T2) MOSFET qui lorsqu'un courant de retour se présente, bloque le transistor (T2) dans la branche transversale,
**caractérisé en ce que**
la tension est ensuite surveillée par le transistor (T2) MOSFET dans la branche transversale, si un courant de retour circule, c'est-à-dire un courant à travers la bobine (L) dans la direction de la sortie (25) vers l'entrée (10) du convertisseur à bobine, en détectant le potentiel de tension (U₁) à la prise milieu du demi-pont formé par les deux transistors (T1, T2) MOSFET et,
lorsqu'un tel courant de retour ou un potentiel de tension critique, se présente le transistors (T2) MOSFET de la branche transversale est bloqué pour empêcher le courant de retour.

2. Convertisseur à bobine selon la revendication 1,
**caractérisé en ce que**
pour la détection de tension, un comparateur (14) compare l'un avec l'autre les potentiels de tension aux raccordements drain et source du transistor (T2) MOSFET dans la branche transversale et délivre ensuite un signal de sortie de commande lorsque le potentiel (U₁) de tension au raccordement (D) de drain est supérieur à celui du raccordement (S) de source qui est de préférence au potentiel (11) de la masse.

3. Convertisseur à bobine selon la revendication 2,
**caractérisé en ce qu'**
une logique (18) de libération prévue pour le redresseur synchrone exploite le signal (U_{K}) de sortie du comparateur (14) en liaison avec le signal (19) de sortie de la commande (20) destiné à la grille (G) du transistor (T2) MOSFET figurant dans la branche transversale.

4. Convertisseur à bobine selon la revendication 3,
**caractérisé en ce que**
la logique de libération est un circuit (18) ET, qui reçoit comme signaux d'entrée le signal (19) de commande de grille pour la grille (G) du transistor (T2) MOSFET figurant dans la branche transversale et le signal (17) de sortie du comparateur (14).

5. Convertisseur à bobine selon la revendication 2 ou l'une des revendications 3 ou 4,
**caractérisé en ce que**
le comparateur est un ampli opérationnel ou un comparateur ( 14) auquel est apporté à l'entrée (-) inversée le potentiel (U₁) de tension au raccordement (D) de drain du transistor (T2) MOSFET figurant dans la branche transversale et, à l'entrée (+) non inversée, le potentiel de tension au raccordement (S, 11) de source qui est au potentiel de la masse, du transistor (T2) MOSFET figurant dans la branche transversale.

6. Convertisseur à bobine selon la revendication 2 ou l'une des revendications 3 à 5,
**caractérisé en ce que**
le signal (U_{K}) de sortie du comparateur (14) est enregistré dans une mémoire (22) et est mis à disposition pour d'autres types d'utilisation, en particulier un microcontrôleur.

7. Convertisseur à bobine selon la revendication 1 ou l'une des revendications 2 à 6,
**caractérisé en ce que**
dans une branche transversale en amont du transistor (T1) MOSFET pilotable figurant dans la branche longitudinale, un condensateur (13) est prévu entre l'entrée (10) positive et le potentiel (11) de la masse.

8. Convertisseur à bobine selon l'une quelconque des revendications précédentes,
**caractérisé en ce qu'**
il est utilisé dans un circuit parallèle de plusieurs modules de puissance.

9. Convertisseur à bobine selon l'une quelconque des revendications 1 à 7,
**caractérisé en ce qu'**
il est utilisé pour former des abaisseurs imbriqués (interleaved buck converters) dans lesquels chacun des modules de puissance est piloté en décalage de phase.

10. Procédé de détection et d'empêchement de courants de retour dans un convertisseur abaisseur à bobine, dans lequel un commutateur commandable est en série avec une bobine dans la branche longitudinale et un condensateur dans la branche transversale à la sortie, ainsi que dans la branche transversale, en amont de la bobine, une diode de roue libre, et qui sert à transposer une tension continue d'entrée en une autre tension continue inférieure de sortie, avec,
à la place de la diode de roue libre dans la branche transversale, en amont de la bobine, un deuxième commutateur commandable est utilisé pour former un redresseur synchrone,
les commutateurs commandables étant des transistors MOSFET commandés en particulier par une commande par largeur d'impulsions,
**caractérisé en ce que**
la tension dans la branche transversale est ensuite surveillée par les transistors MOSFET, si un courant de retour circule, c'est-à-dire, un courant au travers de la bobine dirigé de la sortie vers l'entrée du convertisseur à bobine, ou le potentiel de tension au raccordement point milieu du demi-pont formé à partir des deux transistors MOSFET est détecté, et à l'occurrence d'un tel courant de retour ou potentiel de tension critique, le transistor MOSFET dans la branche transversale est bloqué pour empêcher le courant de retour.
